# EUROPÄISCHE PATENTSCHRIFT

(11) **EP 0 377 875 B1**
(45) Veröffentlichungstag und Bekanntmachung des Hinweises auf die Patenterteilung: **16.03.1994**
(21) Anmeldenummer: 89123607.7
(22) Anmeldetag: 21.12.1989
(51) Int. Cl.: F02D 11/10, F02D 41/22

(54) **Lastverstelleinrichtung**
Load control apparatus
Dispositif de réglage de charge

(30) Priorität: 10.01.1989 DE 3900437
(43) Veröffentlichungstag der Anmeldung: 18.07.1990
(73) Patentinhaber: Mannesmann VDO AG, 60326 Frankfurt (DE); DAIMLER-BENZ AKTIENGESELLSCHAFT, 70567 Stuttgart (DE)
(72) Erfinder: Pfalzgraf, Manfred, D-6000 Frankfurt/Main (DE); Mausner, Eberhard, D-6232 Bad Soden/Ts. (DE); Filsinger, Reinhard, D-7310 Plochingen (DE)
(74) Vertreter: Klein, Thomas, Dipl.-Ing. (FH)

(56) Entgegenhaltungen:
- EP-A- 0 121 939
- EP-A- 0 315 794
- US-A- 4 787 353
- PATENT ABSTRACTS OF JAPAN, Band 9, Nr. 3, (M-349), 9. Januar 1985;& JP-A-59 153 945 (NISSAN JIDOSHA K.K.) 01-09-1984

## Beschreibung

Die Erfindung betrifft eine Einrichtung zur Verstellung der Leistung einer Brennkraftmaschine mit
- einem Stellglied,
- einem auf das Stellglied einwirkenden Steuerelement, das durch einen mit einem Fahrpedal gekoppelten, mittels einer Rückstellfeder in Leerlaufrichtung des Stellgliedes vorgespannten Mitnehmer und zusätzlich durch einen elektrischen Stellantrieb in Stellrichtung zwischen einer Leerlaufposition und einer Vollastposition hin- und herbewegbar ist,
- einem dem Mitnehmer zugeordneten Sollwerterfassungselement und
- einem dem Steuerelement zugeordneten Istwerterfassungselement,
- wobei der elektrische Stellantrieb in Abhängigkeit von den erfaßten Werten von einer elektronischen Regeleinrichtung ansteuerbar ist.

Lastverstelleinrichtungen dieser Art werden in Kraftfahrzeugen zur Betätigung einer Drosselklappe oder der Einspritzpumpe durch das Fahrpedal vorgesehen, um mittels der elektronischen Regeleinrichtung derart eingreifen zu können, daß beispielsweise Radschlupf beim Anfahren infolge zu hoher Leistung vermieden wird. Die Regeleinrichtung kann bei zu raschem Niedertreten des Fahrpedals dafür sorgen, daß beispielsweise die Drosselklappeweniger geöffnet wird, als es der Fahrpedalstellung entspricht, so daß die Brennkraftmaschine nur eine zu keinem Durchdrehen der Räder führende Leistung erzeugt. Andere automatische Eingriffe in die Lastverstelleinrichtung sind erforderlich, wenn ein Getriebe automatisch schalten soll, oder wenn die Leerlaufdrehzahl auch bei unterschiedlichen Leistungserfordernissen im Leerlauf auf einen konstanten Wert geregelt werden soll. Bekannt ist es bei einer solchen Verstelleinrichtung auch, durch einen Geschwindigkeitsbegrenzungsregler einzugreifen, der durch die Möglichkeit der Entkoppelung des Steuerelementes vom Fahrpedal dafür sorgen kann, daß jeweils diejenige Leistung eingestellt wird, die zur Aufrechterhaltung der eingestellten Geschwindigkeit erforderlich ist. Daneben kann es insbesondere unter dem Aspekt des Fahrkomforts erwünscht sein, eine progressive bzw. degressive Anlenkung des Fahrpedals vorzusehen, mit der Möglichkeit einer gegenüber der Fahrpedalstellung verringerten bzw. erhöhten Leistungseinstellung.

Sicherheitsgesichtspunkte machen es jedoch erforderlich, daß auch bei einem Defekt in der Regeleinrichtung sichergestellt ist, daß bei Rücknahme der Fahrpedalstellung die Leistungseinstellung synchron mit der Stellung des Fahrpedals abnimmt. Erreicht wird dies bislang durch Sicherheitseinrichtungen in der elektronischen Regeleinrichtung.

Fehlermöglichkeiten in der Regeleinrichtung verringert man dadurch, daß man die Elektronik redundant baut. Dennoch ist eine nicht der Fahrpedalstellung entsprechende, zu hohe Leistungseinstellung bei einem Defekt nicht völlig ausgeschlossen.

Lastverstelleinrichtungen der genannten Art sind in aller Regel mehrteilig ausgebildet, daß heißt bestimmte Elemente sind dem Fahrpedal zugeordnet, während andereElemente mit dem Steuerelement zusammenwirken. Eine derartige getrennte Anordnung der Bauteile bedingt einerseits ein erhöhtes Bauvolumen der Lastverstelleinrichtung, andererseits ist durch die Anordnung der Bauteile an verschiedenen Stellen des Fahrzeugs nicht sichergestellt, daß die Bauteile rückwirkungsfrei mit der Drosselklappe oder der Einspritzpumpe zusammenwirken.

Aus der EP-A-315 794 ist eine Lastverstelleinrichtung der eingangs genannten Art bekannt. Sie umfaßt ein Stellglied, ein Steuerelement, einen Mitnehmer, einen elektrischen Stellantrieb, ein Sollwerterfassungselement und ein Istwerterfassungselement sowie Rückstellfedern, die den Mitnehmer in Leerlaufrichtung und das Steuerelement entgegen der Leerlaufrichtung vorspannen. Dabei soll die Rückstellkraft der in Leerlaufrichtung wirkenden Feder mindestens doppelt so groß sein wie die Federkraft der entgegen der Leerlaufrichtung wirkenden Feder. Das erfordert eine relativ starke Rückstellfeder für den Mitnehmer mit entsprechendem Platzbedarf.

Der Erfindung liegt die Aufgabe zugrunde, eine Lastverstelleinrichtung der eingangs genannten Art derart zu gestalten, daß sie kompakt ausgebildet ist und in allen Lastzuständen, insbesondere bei Ausfall der elektronischen Regeleinrichtung, eine definierte Rückwirkung auf das Stellglied und damit die Drosselklappe bzw. die Einspritzpumpe ermöglicht.

Gelöst wird die Aufgabe erfindungsgemäß durch, die Merkmale aus dem Anspruch 1.

Durch die erfindungsgemäße Ausgestaltung der Lastverstelleinrichtung mit einem Freilaufelement ist gewährleistet, daß das Steuerelement in den durch das Spiel vorgegebenen Grenzen beliebig bezüglich des Mitnehmers bewegt werden kann und hierdurch auf einfache Art und Weise in diesen Grenzen die Möglichkeit einer progressiven bzw. degressiven Anlenkung des Fahrpedals besteht. Durch den Eingriff des Steuerelementes in das im Mitnehmer gelagerte Freilaufelement ist zudem sichergestellt, daß bei einem Ausfall der elektronischen Regeleinrichtung der Mitnehmer und das Steuerelement zueinander geometrisch definiert geführt werden. Von besonderer Bedeutung ist in diesem Zusammenhang, daß bei einem Ausfall der Regeleinrichtung und bei einem gegenüber dem Istwert erhöhten, durch den Fahrer vorgegebenen Sollwert keine Beschleunigung des Fahrzeuges erfolgt, da das Steuerelement mittels der dieses in Leerlaufrichtung vorspannenden Rückstellfeder gegen den leerlaufseitigen Anschlag des Freilaufelementes bewegt wird. Um auch Fahrzustände drohenden Radschlupfes bescherrschen zu können, ist schließlich die Möglichkeit vorgesehen, über das Steuerelement das Freilaufelement im Mitnehmer entgegen der Kraft der Koppelfeder in Leerlaufrichtung zu verschieben und damit das die Leistung der Brennkraftmaschine bestimmende Stellglied abzuregeln, wobei nach diesem Regelvorgang und erneut miteinander korrelierenden Positionen von Mitnehmer und Steuerelement die Koppelfeder das Freilaufelement erneut in seiner Ausgangsstellung bezüglich des Mitnehmers zurückführt.

Die konstruktive Ausbildung des Freilaufelementes ist grundsätzlich beliebig, es muß nur gewährleistet sein, daß das Steuerelement in diesem in dessen Stellrichtung mit Spiel eingreift und daß zur Beherrschung der Antischlupfregelung das Freilaufelement in Leerlaufrichtung vorgespannt im Mitnehmer geführt ist. Die Führung des Freilaufelementes im Mitnehmer kann beispielsweise entlang einer linearen Führungsbahn erfolgen, der Mitnehmer kann gleichfalls als Drehteil ausgebildet und das Freilaufelement entlang einer Kreisbahn im Mitnehmer geführt sein. Eine besondere Ausführungsform der Erfindung sieht vor, daß das Freilaufelement als Freilaufhaken ausgebildet ist und das Steuerelement zwischen die Schenkel des Freilaufhakens mit Spiel eingreift. Der Freilaufhaken ist dabei zweckmäßig im Bereich seines die beiden Schenkel verbindenden Steges im Mitnehmer verschiebbar gelagert und es weisen die Schenkel demzufolge in Richtung des Steuerelementes, wobei der Abstand der Schenkel voneinander und die Stärke des Steuerelementes den Spielraum des Steuerelementes im Freilaufhaken bestimmen und sich hierdurch das Regelspiel von Mitnehmer und Steuerelement zueinander im Sinne einer progressiven bzw. degressiven Anlenkung des Fahrpedals ergibt.

Eine vorteilhafte Ausgestaltung der Erfindung sieht vor, daß bei nicht aktiviertem elektrischen Stellantrieb und in Leerlaufstellung befindlichem Mitnehmer das Steuerelement in Anlage mit einem entgegen der Leerlaufstellrichtung federbelasteten Anschlag gelangt. In diesem Betriebszustand zieht somit die dem Steuerelement zugeordnete Rückstellfeder dieses in Leerlaufrichtung, während die Feder des Anschlages das Steuerelement bei Erreichen des Leerlaufbereiches in einer definierten Leerlaufstellung positioniert,beispielsweise in einer maximalen Leerlaufstellung. Im Gegensatz hierzu sind im elektronischen Regelbetrieb durchaus Lastzustände ansteuerbar, bei denen das Steuerelement leistungsmäßig verminderte Leerlaufstellungen anfährt und in diesen Positionen den federbelasteten Anschlag in Richtung minimaler Leerlaufstellung bewegt.

Gemäß einer bevorzugten Ausführungsform der Erfindung ist zwischem dem Mitnehmer und dem Steuerelement eine Abstandsüberwachungseinrichtung vorgesehen, die bei einer Abweichung von Mitnehmer und Steuerelement von einem vorgegebenen Abstand der Regeleinrichtung ein Signal zum Zwecke der Plausibilitätsprüfung zuführt, wobei die Regeleinrichtung bei fehlenden definierten Plausibilitätsbedingungen den elektrischen Stellantrieb abkoppelt oder ausschaltet und Mitnehmer und Steuerelement mechanisch zwangsgeführt werden. Die Abstandsüberwachungseinrichtung kann insbesondere als Sicherheitskontaktschalter ausgebildet sein, mit der die Position des Steuerelements im Freilaufelement in Bezug zu dem jeweiligen Fahrzustand des von der Brennkraftmaschine angetriebenen Fahrzeuges auf die Plausibilitätsbedingungen überprüfbar ist, in dem der elektronischen Regeleinrichtung das Signal zugeführt wird. Die Sicherheitskontaktschaltung überprüft fortwährend die Stellung von Mitnehmer und Steuerelement und basiert damit im wesentlichen auf deren Abstandsmessung. Sollten definierte Abstände von Mitnehmer und Steuerelement nicht mit durch die Fahrzustände vorgegebenen Abständen korrelieren und gleichzeitig mit auf diese Fahrzustände bezogenen Plausibilitätsbedingungen übereinstimmen, führt das Signal zu einem Abschalten der elektronischen Regeleinrichtung, womit der Mitnehmer und das Steuerelement mittels der auf das Steuerelement und den Mitnehmer einwirkenden Rückstellfedern und der zwischen Freilaufelement und Mitnehmer angeordneten Koppelfeder mechanisch zwangsgeführt werden. Die Ansteuerung der elektronischen Regeleinrichtung über ein Signal ist dabei in dem Sinne aufzufassen, daß sowohl die Erzeugung eines Signals als auch ein Ausbleiben eines Signals im Sinne einer Fehlermeldung für die elektronische Regeleinrichtung augefaßt werden können, beispielsweise kann die elektronische Regeleinrichtung bei fehlendem Schaltkontaktsignal und fehlenden Plausibilitätsbedingungen den elektrischen Stellantrieb entkoppeln oder abschalten.

Zweckmäßig weist der Sicherheitskontaktschaltkreis zwei Sicherheitskontakte auf, wobei bei aktiviertem elektrischen Stellantrieb der eine Sicherheitskontakt den Leerlaufbereich der Brennkraftmaschine und der andere Sicherheitskontakt den Teil- und Vollastbereich überwacht, sowie im Übergangsbereich vom Leerlauf- zum Teillastbetrieb beide Sicherheitskontakte aktiviert sind. Die Integrierung von zwei Sicherheitskontakten in den Sicherheitskontaktschaltkreis ermöglicht es, das Sicherheitssystem im Betriebszustand ständig auf dessen Funktion zu überprüfen, da im Betrieb die Lastverstelleinrichtung fortwährend vom Leerlauf- zum Teillast-/Vollastbereich wechselt und nur bei Aktivierung der Sicherheitskontakte über den gesamten Lastbereich das Signal der elektronischen Regeleinrichtung zugeführt wird, die dieses mit den auf die bestimmten Fahrzustände bezogenen Plausibilitätsbedingungen zu überprüfen hat.

Zweckmäßig sollte ein Spannungsversorgungspfad für beide Sicherheitskontakte vorgesehen sein, sowie ein erster, von dem einen Sicherheitskontakt zur Regeleinrichtung führender Spannungspfad und ein zweiter, vom anderen Sicherheitskontakt zur Regeleinrichtung führender Spannungspfad, wobei ein Kontaktelement mit dem Spannungsversorgungspfad und einerseits mit dem sich über den Leerlaufbereich erstreckenden Spannungspfad für den einen Sicherheitskontakt, sowie andererseits mit dem sich über den Teil-/Vollastbereich erstreckenden Spannungspfad für den anderen Sicherheitskontakt verbindbar ist. Durch eine derartige Ausgestaltung der Lastverstelleinrichtung im Bereich der Sicherheitskontaktschaltung ist gewährleistet, daß bei geringem baulichen Aufwand und geringem Raumbedarf gewünschten Schaltfunktionen ablaufen können.

Durch die erfindungsgemäße Ausgestaltung der Lastverstelleinrichtung lassen sich, wie schon teilweise angedeutet, die unterschiedlichsten Lastzustände der Brennkraftmaschine verwirklichen. So kann zunächst einem Schlupf der Räder entgegengewirkt werden, indem im Betriebszustand der Antischlupfregelung das Freilaufelement durch das Steuerelement entgegen der Kraft der Koppelfeder in Leerlaufrichtung bewegt wird. Darüber hinaus kann eine Geschwindigkeitsbegrenzungsregelung verwirklicht werden, bei der im Lastzustand der Vollast das Steuerelement geringfügig beabstandet zu dem vollastseitigen Anschlag des Freilaufelementes angeordnet ist. Schließlich läßt sich nicht nur eine lineare sondern auch eine progressive und degressive Anlenkung des Fahrpedals verwirklichen. Hierfür sollte der zwischen den, die beiden Endpositionen des Stellgliedes darstellenden Anschlägen des Freilaufelementes gebildete Steuerbereich der Lastverstelleinrichtung in linearer Beziehung zueinander stehende Sollwertvorgaben und degressive und/oder lineare und/oder progressive Istwertvorgaben aufweisen.

Die erfindungsgemäße Lastverstelleinrichtung wird besonders zweckmäßig für eine Brennkraftmaschine angesehen, bei der das Stellglied als Drosselklappe ausgebildet ist und darüber hinaus der Mitnehmer, das Freilaufelement, die Koppelfeder, das Steuerelement, die Rückzugsfeder des Steuerelements, das Sollwert- und Istwerterfassungselement und die Drosselklappe eine Baueinheit bilden. Es ist hierdurch gewährleistet, daß Steuerungsabläufe zwischen den Teilen auf kleinstem Raum erfolgen können, durch die Anordnung der Teile im Bereich des Stellgliedes der Brennkraftmaschine ist zudem sichergestellt, daß die Wirkkette unmittelbar im Bereich der Brennkraftmaschine einwirkt. So kann beispielsweise das Fahrpedal über einen Bowdenzug direkt an dem im Bereich des Stellgliedes der Brennkraftmaschine angeordneten, über die Rückstellfeder in Leerlaufrichtung vorgespannten Mitnehmer angreifen, die Position des Mitnehmers wird durch das Sollwerterfassungselement und die des Steuerelementes durch das Istwerterfassungselement dargestellt und die von den beiden Elementen erfaßten Werte an die elektronische Regeleinrichtung weitergegeben, die das mit dem Stellglied zusammenwirkende Steuerelement entsprechend der zwischen den beiden Elementen vorgegebene Regelcharakteristik über den elektrischen Stellantrieb steuert.

Im Detail kann die erfindungsgemäße Lastverstelleinrichtung beispielsweise mit einem Potentiometer arbeiten, das Sollwerterfassungselement ist dabei zweckmäßig als mit dem Mitnehmer verbundener erster Schleifer des zwei Schleifer aufweisenden Vorgabe- und Rückmeldepotentiometers ausgebildet, dessen zweiter Schleifer mit dem Steuerelement gekoppelt ist, wobei der gegenseitige Abstand der Schleifer mittels der elektronischen Regeleinrichtung überwacht wird.

Denkbar wäre es, daß trotz Trennung des elektrischen Stellantriebes die den Mitnehmer in Leerlaufrichtung vorspannende Feder infolge eines Klemmens von Bauteilen nicht in der Lage ist, den Mitnehmer in Leerlaufrichtung zu bewegen. Ein solcher Fehler kann auf einfache Weise dadurch dargestellt werden, daß am Fahrpedal ein Pedalkontaktschalter vorgesehen ist, durch den die Kraftbeaufschlagung des Fahrpedals durch den Fahrer feststellbar ist.

Von besonderer Bedeutung ist bei der erfindungsgemäßen Lastverstelleinrichtung, daß alle über einen elektronischen Kreis auf das Steuerelement einwirkenden Elemente der Lastverstelleinrichtung beim Ausfall des elektrischen Systems deaktiviert werden, so daß die Lastverstelleinrichtung über die Koppelung von Mitnehmer und Steuerelement mechanisch arbeitet. So ist vorgesehen, daß die Regelelektronik im spannungsfreien Zustand der Lastverstelleinrichtung ausgeschaltet ist. Entsprechendes gilt für den elektrischen Stellantrieb, der zweckmäßig über eine Kupplung mit dem Steuerhebel koppelbar sein sollte, die Kupplung sollte im spannungsfreien Zustand des elektrischen Stellantriebes geöffnet sein. Prinzipiell ist es aber nicht erforderlich, daß eine Kupplung vorgesehen ist, bei einer unmittelbaren Kopplung des elektrischen Stellantriebes mit dem Steuerelement müßten bei einem Ausfall der elektronischen Regeleinrichtung dann aber die weiteren Rückstellfedern so stark dimensioniert sein, daß sie den elektrischen Stellantrieb bewegen können, womit Rückwirkungen auf den Mitnehmer und das Fahrpedal nicht ausgeschlossen werden können.

Gemäß einer besonderen Ausführungsform der Erfindung ist vorgesehen, daß der elektrische Stellantrieb in Abhängigkeit von einer oder mehreren zusätzlichen Regelgrößen ansteuerbar ist. Eine zusätzliche Regelgröße kann beispielsweise die Drehzahl des Motors sein, insbesondere die Leerlaufdrehzahl. Darüber hinaus sind von besonderer Bedeutung Regelgrößen, die auf den Höhendruck, den Kaltstart und damit die Motortemperatur, die Gangposition und damit den Lastzustand des Fahrzeuges, den Schubbetrieb und damit indirekt die Fahrzeuggeschwindigkeit Bezug nehmen, ferner können sich Regelgrößen aus der Geschwindigkeitsreglervorgabe, der Antischlupfregelung und damit der Raddrehzahlerfassung sowie der Motorschleppmomentregelung ergeben.

Es zeigt.
- Figur 1: ein Blockschaltbild der erfindungsgemäßen Lastverstelleinrichtung mit einem als Drosselklappe ausgebildeten Stellglied,
- Figur 2: eine Detaildarstellung der Lastverstelleinrichtung im Bereich von Mitnehmer, Freilaufhaken und Steuerelement in der Funktion der Leerlaufregelung, dargestellt in der maximalen Leerlaufposition,
- Figur 3: eine Darstellung gemäß Figur 2 in der Funktion der Nachlaufsteuerung,dargestellt für Teillast,
- Figur 4: eine Darstellung gemäß Figur 2 in der Funktion der Antischlupfregelung, dargestellt für den Vorgang des Abregelns,
- Figur 5: eine Darstellung gemäß Figur 2 in der Funktion der Geschwindigkeitsbegrenzungsregelung, dargestellt in Vollastposition,
- Figur 6: ein Funktionsdiagramm zur Verdeutlichung der Abhängigkeiten des Öffnungswinkels der Drosselklappe β_{DK} vom Pedalwinkel α_{Pedal} und
- Figur 7: das in Figur 6 dargestellte Funktionsdiagramm im Bereich kleiner Winkel.

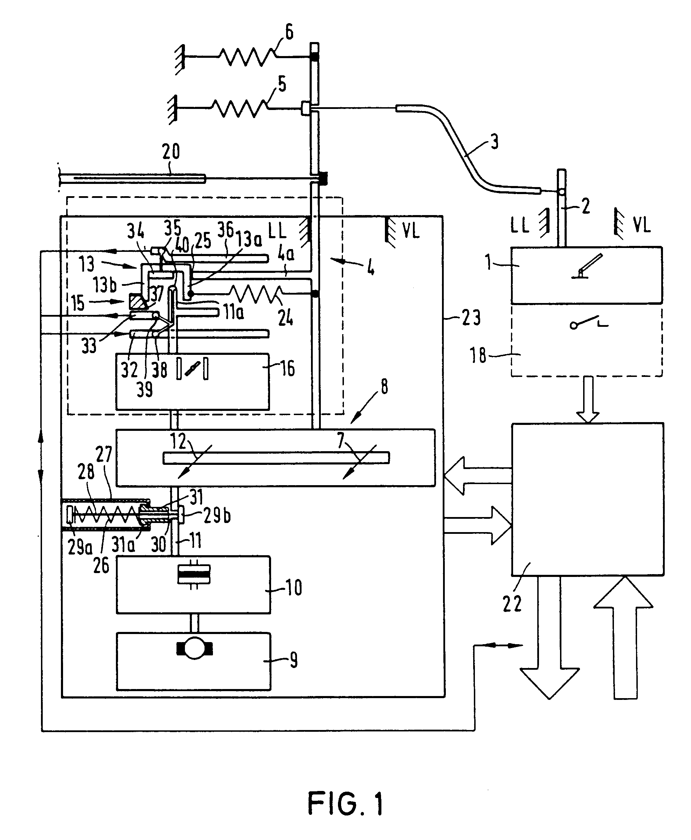

In der Figur 1 ist ein Fahrpedal 1 gezeigt, mit dem ein Hebel 2 zwischen einem Vollastanschlag VL und einem Leerlaufanschlag LL verschiebbar ist. Der Hebel 2 vermag über einen Gaszug 3 einen Mitnehmer 4 in Richtung eines weiteren Volllastanschlages VL zu verschieben und ist mittels einer am Gaszug 3 angreifenden Rückzugfeder 5 in Leerlaufrichtung vorgespannt. Eine am Mitnehmer 4 angreifende Rückstellfeder 6 spannt diesen in Leerlaufrichtung vor Der Mitnehmer 4 ist mit einem Sollwerterfassungselement in Art eines Schleifers 7 eines Potentiometers 8 verbunden welches einen Stellmotor 9 steuert, der über eine Kupplung 10 ein Steuerelement 11 zu verschieben vermag. Das Steuerelement 11 dient unmittelbar zum Verstellen einer Drosselklappe 16 oder einer Kraftstoffeinspritzung. Die Stellung dieses Steuerelementes 11 wird über ein Istwerterfassungselement in Art eines zweiten, mit ihm fest verbundenen Schleifers 12 auf das Potentiometer 8 übertragen. Folgt das Steuerelement 11 exakt der Vorgabe des Fahrpedals 1, so muß der gegenseitige Abstand der Schleifer 7 und 12 konstant bleiben.

Mit den Schleifern 7 und 12 des Potentiometers 8 wirkt eine elektronische Regeleinrichtung 22 zusammen, die unter anderem den elektrischen Stellmotor 9 und die Kupplung 10 ansteuert. Aufgrund der Möglichkeit externe Vorgabewerte durch die Regeleinrichtung 22 darzustellen, kann das Steuerelement 11 unabhängig vom Mitnehmer 4 bewegt werden.

Zwischen dem Mitnehmer 4 und dem Steuerelement 11 ist eine mechanische Zwangsführung gegeben. Hierzu nimmt der Arm 4a des Mitnehmers 4 einen in dessen Stellrichtung verschiebbar gelagerten Freilaufhaken 13 auf, zwischen dessen beiden Schenkeln 13a und 13b das Steuerelement 11 mit seinem freien Ende 11a mit Spiel gelagert ist. Die verschiebliche Lagerung des Freilaufhakens 13 im Mitnehmer 4 kann dabei beliebig erfolgen, beispielsweise indem ein Ansatz am Freilaufhaken eine Nut im Mitnehmer durchsetzt und in Längsrichtung der Nut verschiebbar ist. Der Einfachheit halber ist in der Figur 1 der Freilaufhaken 13 als separates, in Anlage mit dem Mitnehmer 4 befindliches Teil ohne die Führungen dargestellt, die Teile 4 und 13 können entlang einer Geraden oder auch in einem Bogen ineinander geführt sein. Mit dem Schenkel 13a des Freilaufhakens 13 und dem Mitnehmer 4 ist eine als Zugfeder ausgebildete Koppelfeder 24 verbunden, die den Freilaufhaken 13 in Vollastrichtung des Mitnehmers 4 vorspannt, womit sichergestellt ist, daß der Freilaufhaken 13 sich im Regelfall definiert im Punkt 25 an den Mitnehmer 4 anlegt.

Auf das Steuerelement 11 wirkt weiterhin eine als Druckfeder ausgebildete Rückstellfeder 26, die das Steuerelement 11 in Leerlaufrichtung vorspannt. Die Rückstellfeder 26 umgibt in einem Zylindergehäuse 27 eine Kolbenstange 28, deren im Gehäuse 27 geführtes Ende eine ringförmige Anschlagplatte 29a aufweist. Das aus dem Gehäuse 27 herausragende Ende der Kolbenstange 28 durchsetzt eine Ausnehmung 30 in dem Steuerelement 11 und es hintergreift eine an diesem Ende befindliche weitere ringförmige Anschlagplatte 29b das Steuerelement 11. Im Gehäuse 27 ist schließlich ein Distanzstück 31 vorgesehen, das die Kolbenstange 28 im Austrittsbereich aus dem Gehäuse 27 umgibt und von der Rückstellfeder 26 beaufschlagt wird, so daß es bei Anlage eines am Distanzstück 31 angeordneten Ansatzes 31a geringfügig beabstandet vom Steuerelement 11 zu liegen kommt. Im Teillast- und Vollastbereich verursacht die Rückstellfeder 26 somit eine Rückstellkraft auf das Steuerelement 11, während infolge der gleichzeitigen Beaufschlagung des Distanzstückes 31 durch die Rückstellfeder 26 und die geometrische Auslegung der Teile das Steuerelement 11 im Bereich einer maximalen Leerlaufstellung im Kräftegleichgewicht zwischen dem Distanzstück 31 und der Anschlagplatte 29 gehalten wird, darüber hinaus aber eine Überführung des Steuerelementes 11 mittels des Stellmotors 9 entgegen der Kraft der Rückstellfeder 26 bei einer Verschiebung des Distanzstückes 31 in das Gehäuse 27 hinein, möglich ist.

Wie der Darstellung der Figuren 1 bis 5 zu entnehmen ist, weist die Lastverstelleinrichtung im Bereich des Armes 4a des Mitnehmers 4 des Freilaufhakens 13 und des Endes 11a des Steuerelements 11 eine Abstandsüberwachungseinrichtung 15 für den Mitnehmer 4 und das Stellelement 11 auf. Diese umfaßt eine Sicherheitskontaktschaltung, mit der die Position des Teiles 11a des Steuerelementes 11 im Freilaufhaken 13 im Bezug zu dem jeweiligen Fahrzustand des von der Brennkraftmaschine angetriebenen Fahrzeugs auf Plausibilitätsbedingungen überprüfbar ist, indem der elektrischen Regeleinrichtung 22, wie durch die Pfeile in Figur 1 verdeutlicht, ein Signal zugeführt wird, wobei bei Fehlen des Signals und bestimmter Plausibilitätsbedingungen der elektrische Stellmotor 9 mittels der Kupplung 10 abgekoppelt und damit die Lastverstelleinrichtung ausschließlich mechanisch, das heißt durch die mechanische Kupplung von Mitnehmer 4 und Steuerelement 11 mittels des Freilaufhakens 13 und der Federn 6, 24 und 26 funktioniert.

Im einzelnen weist die Sicherheitskontaktschaltung einen parallel zur Bewegungsrichtung des Armes 4a des Mitnehmers 4 verlaufenden Spannungsversorgungspfad 32 auf, der sich über den gesamten Lastbereich der Lastverstelleinrichtung erstreckt, sowie einen parallel hierzu angeordneten Kontaktpfad 33 für einen ersten Sicherheitskontakt, der sich nur über den Leerlaufbereich mit geringfügiger Ausdehnung zum Teillastbereich erstreckt. Schließlich weist der Freilaufhaken 13 parallel zum Spannungsversorgungspfad 32 ein sich vom Schenkel 13b des Freilaufhakens 13 bis geringfügig über die Hälfte des Abstands der beiden Schenkel 13a, 13b erstreckenden, dem Ende 11a des Steuerelements 11 zugewandten Kontaktpfad 34 auf.

Von diesem Kontaktpfad 34 führt durch den die beiden Schenkel 13a und 13b des Freilaufhakens 13 verbindenden Steg ein Kontaktelement 35, das einen den Teillast-/Vollastbereich überdeckenden Kontaktpfad 36 ständig kontaktiert, der sich zur Überlappung mit dem Kontaktpfad 33 geringfügig in den Leerlaufbereich erstreckt. Der Kontaktpfad 36 ist im Teillastbereich mit einer Kröpfung versehen, wobei die entsprechende Folgebewegung des Freilaufhakens 13 durch einen nicht näher dargestellten formschlüssigen Eingriff des freien Endes des Schenkels 13b des Freilaufhakens 13 in einer entsprechend der Kröpfung ausgebildeten Rampenschräge 37 erzeugt wird. Das Ende 11a des Steuerelements 11 weist schließlich drei miteinander elektrisch leitend verbundene Kontaktelemente 38, 39 und 40 auf, wobei das Kontaktelement 38 den Spannungsversorgungspfad 32 kontaktiert, sowie das Kontaktelement 39 im Leerlaufbereich den Spannungspfad 33 und das im Endpunkt des Steuerelementes 11 angeordnete Kontaktelement 40 im Teillast-/Vollastbereich den Kontaktpfad 34 kontaktieren kann.

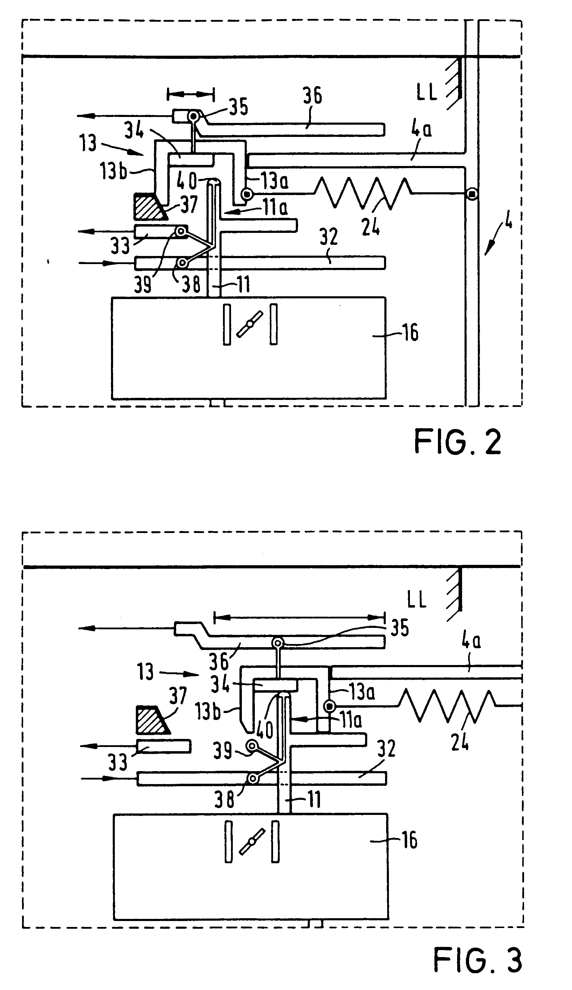

Ausgehend von der in den Figuren 1 und 2 gezeigten maximalen Leerlaufstellung bedeutet dies, daß bei ordnungsgemäßer Funktion der Lastverstelleinrichtung und Vorliegen von vorgegebenen Plausibilitätsbedingungen immer einer der Kontaktpfade 33 und 36 über den Spannungsversorgungspfad 32 bestromt wird. So kontaktiert bis zu der in den Figuren 1 und 2 gezeigten maximalen Leerlaufstellung das Kontaktelement 39 den Kontaktpfad 33, beim Übergang zum Teillastbetrieb wird über die Rampenschräge 37 der Kontaktpfad 34 in elektrisch leitende Verbindung mit dem Kontaktelement 40 gebracht und damit in der Übergangsphase zum Teillastbetrieb gleichzeitig auch der Kontaktpfad 36 bestromt. Ist dies erfolgt, endet die Kontaktierung des Kontaktpfades 33 und es wird wie der Darstellung der Figur 3 zu entnehmen ist, bis zum Erreichen der Vollaststellung ausschließlich der Kontaktpfad 36 über das Kontaktelement 40 kontaktiert. Im Fahrbetrieb führen damit die ständigen Kontaktwechsel zu einer fortlaufenden Überprüfung der Funktion der elektronisch geregelten Lastverstelleinrichtung; sollten jemals beide Spannungspfade unbestromt sein und Plausibilitätsbedingungen nicht vorliegen, führt dies zu einem Abschalten der elektronischen Regeleinrichtung, womit die Lastverstelleinrichtung mechanisch weiterbetrieben wird.

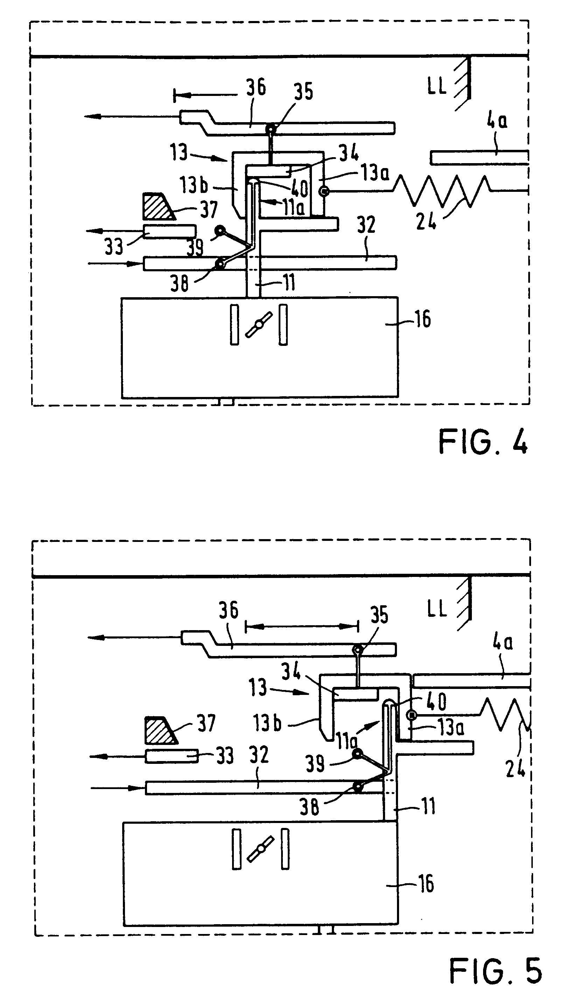

Besondere Fahrzustände, bei denen die Plausibilitätsbedingungen erfüllt sind, sind beispielsweise in den Figuren 4 und 5 verdeutlicht. Figur 4 zeigt den Fall der Antischlupfregelung, bei der aufgrund des Steuerbefehls der elektrischen Regeleinrichtung der Stellmotor das Steuerelement 11 unabhängig von der durch den Fahrerbefehl vorgegebenen Position des Mitnehmers 4 in Leerlaufrichtung gegen die Kraft der Koppelfeder 24 von dem Arm des Mitnehmers 4 wegbewegt, wobei sich in diesem Fall die Plausibilitätsbedingung für die elektrische Regeleinrichtung aufgrund des Erkennens von bevorstehendem Radschlupf an Meßstellen im Bereich der Räder ergibt. Figur 5 verdeutlicht den Fall der Geschwindigkeitsbegrenzungsregelung bei Vollast, bei der durch Eingriff des elektrischen Stellmotors das Steuerelement 11 soweit in Richtung Vollast bewegt wurde, daß es am Schenkel 13a des Freilaufhakens 13 anliegt und damit der Kontaktpfad 36 nicht kontaktiert wird. Auch hier erkennt die elektronische Regeleinrichtung das Vorliegen der Plausibilitätsbedingung, da ihr der Fahrbefehl der Geschwindigkeitsbegrenzungsregelung eingegeben wurde.

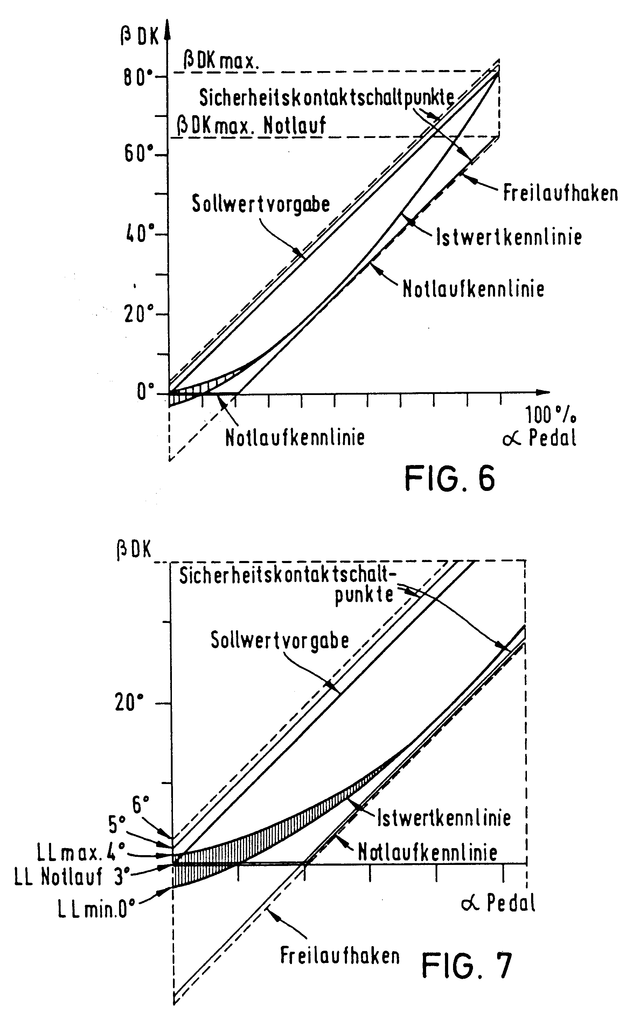

Die Figuren 6 und 7 verdeutlichen Funktionsdiagramme der erfindungsgemäßen Lastverstelleinrichtung. Gezeigt sind zunächst der sich aufgrund der Ausbildung des Freilaufhakens 13 ergebende Fahrbereich, der durch die parallel zueinander verlaufenden gestrichelten Linien verdeutlicht ist. Innerhalb dieses Fahrbereichs erfolgt durch den Fahrer die Sollwertvorgabe, der die Stellung des Mitnehmers entspricht, aufgrund der elektrischen Regeleinrichtung wird die Sollwertvorgabe in einen niedrigen Pedalwinkelbereich in einen degressiven Verlauf und bei hohen Pedalwinkeln in einen progressiven Verlauf der Istwertkennlinie, die der Stellung des Steuerelements und damit des Drosselorgans entspricht, umgesetzt. Die Darstellung der Figur 6 verdeutlicht dabei insbesondere, daß die Istwertkennlinie in niedrigen Pedalwinkelbereichen durchaus stärker oder schwächer degressiv ausgebildet sein kann. Ist ein Istwert zu verzeichnen, der außerhalb des Fahrbereichs zu liegen kommt, so führt dies bei Erreichen der im Diagramm gezeigten Sicherheitskontaktschaltpunkte dazu, daß die elektronische Regelung der Lastverstelleinrichtung außer Kraft gesetzt und in den Notlaufbetrieb überführt wird. Wie in dem Diagramm gezeigt, bedingt im Notlaufbetrieb die Ausbildung des Freilaufhakens, daß,ausgehend von der Leerlaufstellung eine Steigerung des Pedalwinkels zu keiner Veränderung des Drosselklappenwinkels im Sinne einer Öffnung der Drosselklappe führt, sondern dies erst bei einem erhöhten Pedalwinkel erfolgt, wenn der Schenkel 13b des Freilaufhakens 13 in Anlage mit dem Steuerelement 11 gelangt. Wegen der geometrischen Ausbildung des Freilaufhakens 13 ist es dann auch nur möglich, bei voll durchgetretenem Fahrpedal einen geringeren Öffnungswinkel der Drosselklappe zu erzielen, was eine Leistungsverminderung gegenüber der elektronischen Regelung bedeutet.

Durch die in Figur 1 gezeigte Umrahmung 23 soll verdeutlicht werden, daß die innerhalb der Rahmens gezeigten Bauteile eine Baueinheit darstellen.

Für den Fall, daß nach dem Loslassen des Fahrpedals 1 sich der Mitnehmer 4 und das Steuerelement 11 nicht in Richtung Leerlauf verschieben lassen sollten, ist am Fahrpedal 1 ein Pedalkontaktschalter 18 vorgesehen, durch den ein solcher Mißstand feststellbar ist. Der Vollständigkeit halber ist in der Figur 1 ein Automatikzug 20 eines nicht näher dargestellten automatischen Getriebes angedeutet, mit dem der Mitnehmer 4 gleichfalls verschoben werden kann.

## Patentansprüche

1. Einrichtung zur Verstellung der Leistung einer Brennkraftmaschine mit
- einem Stellglied (16),
- einem auf das Stellglied (16) einwirkenden Steuerelement (11), das durch einen mit einem Fahrpedal (1) gekoppelten, mittels einer Rückstellfeder (6) in Leerlaufrichtung des Stellgliedes (16) vorgespannten Mitnehmer (4) und zusätzlich durch einen elektrischen Stellantrieb (9) in Stellrichtung zwischen einer Leerlaufposition (LL) und einer Vollastposition (VL) hin- und herbewegbar ist,
- einem dem Mitnehmer (4) zugeordneten Sollwerterfassungselement (7) und
- einem dem Steuerelement (11) zugeordneten Istwerterfassungselement (12),
- wobei der elektrische Stellantrieb (9) in Abhängigkeit von den erfaßten Werten von einer elektronischen Regeleinrichtung (22) ansteuerbar ist,
dadurch gekennzeichnet, daß
a) das Steuerelement (11) mittels Rückstellfeder (26) in Leerlaufrichtung des Stellgliedes (16) vorgespannt ist und
b) am Mitnehmer (4) ein Freilaufelement (13) angeordnet ist, das
- einen Bereich aufweist, in den das Steuerelement (11) mit Spiel eingreift,
- in Stellrichtung verschiebbar gelagert ist und
- mittels einer mit dem Mitnehmer (4) verbundene Koppelfeder (24) in Öffnungsrichtung des Stellgliedes (16) gegen einen Arm (4a) des Mitnehmers (4) vorgespannt ist.

2. Lastverstelleinrichtung nach Anspruch 1, dadurch gekennzeichnet, daß das Freilaufelement als Freilaufhaken (13) ausgebildet ist und das Steuerelement (11) zwischen die Schenkel (13a, 13b) des Freilaufhakens (13) mit Spiel eingreift.

3. Lastverstelleinrichtung nach Anspruch 1 oder 2, dadurch gekennzeichnet, daß bei nicht aktiviertem elektrischen Stellantrieb (9) und in Leerlaufstellung (LL) befindlichem Mitnehmer (4) das Steuerelement (11) in Anlage mit einem entgegen der Leerlaufstellrichtung federbelasteten Anschlag (31) gelangt.

4. Lastverstelleinrichtung nach einem der Ansprüche 1 bis 3, dadurch gekennzeichnet, daß zwischen dem Mitnehmer (4) und dem Steuerelement (11) eine Abstandsüberwachungseinrichtung (15) vorgesehen ist, die bei einer Abweichung von Mitnehmer (4) und Steuerelement (11) von einem vorgegebenen Abstand der Regeleinrichtung (22) ein Signal zum Zwecke der Plausibilitätsprüfung zuführt, wobei die Regeleinrichtung (22) bei fehlenden definierten Plausibilitätsbedingungen den elektrischen Stellantrieb (9) abkoppelt oder ausschaltet und Mitnehmer (4) und Steuerelement (11) mechanisch zwangsgeführt werden.

5. Lastverstelleinrichtung nach Anspruch 4, dadurch gekennzeichnet, daß die Regeleinrichtung (22) bei fehlendem Signal und fehlendem definierten Plausibilitätsbedingungen den elektrischen Stellantrieb (9) abkoppelt oder abschaltet.

6. Lastverstelleinrichtung nach Anspruch 4 oder 5, dadurch gekennzeichnet, daß die Abstandsüberwachungseinrichtung (15) als Sicherheitskontaktschaltung ausgebildet ist, mit der die Position des Steuerelements (11) im Freilaufelement (13) in Bezug zu dem jeweiligen Fahrzustand des von der Brennkraftmaschine angetriebenen Fahrzeuges auf Plausibilitätsbedingungen überprüfbar ist.

7. Lastverstelleinrichtung nach Anspruch 6, dadurch gekennzeichnet, daß die Sicherheitskontaktschaltung (15) zwei Sicherheitskontakte (39, 33; 40 ,34, 35, 36) aufweist, wobei bei aktiviertem elektrischen Stellantrieb (9) der eine Sicherheitskontakt (39, 33) den Leerlaufbereich der Brennkraftmaschine und der andere Sicherheitskontakt (40, 34, 35, 36) den Teillast- und Vollastbereich überwacht, sowie im Übergangsbereich vom Leerlauf- zum Teillastbetrieb beide Sicherheitskontakte (39, 33; 40, 34, 35, 36) aktiviert sind.

8. Lastverstelleinrichtung nach Anspruch 7, dadurch gekennzeichnet, daß ein Spannungsversorgungspfad (32) für beide Sicherheitskontakte (39, 33; 40, 34, 35, 36) vorgesehen ist, sowie ein erster, von dem einen Sicherheitskontakt (39, 33) zur Regeleinrichtung (22) führender Spannungspfad und ein zweiter vom anderen Sicherheitskontakt (40, 34, 35, 36) zur Regeleinrichtung (22) führender Spannungspfad, wobei ein Kontaktelement (11a) mit dem Spannungsversorgungspfad (32) und einerseits mit dem sich über den Leerlaufbereich erstreckenden Spannungspfad (33) für den einen Sicherheitskontakt (39, 33), sowie andererseits mit dem sich über den Teil-/Vollastbereich erstreckenden Spannungspfad (36) für den anderen Sicherheitskontakt (40, 34, 35, 36) verbindbar ist.

9. Lastverstelleinrichtung nach einem der Ansprüche 1 bis 8 , dadurch gekennzeichnet, daß in dem Betriebszustand der Antischlupfregelung das Freilaufelement (13) durch das Steuerelement (11) entgegen der Kraft der Koppelfeder (24) in Leerlaufrichtung (LL) bewegt wird.

10. Lastverstelleinrichtung nach einem der Ansprüche 1 bis 8 , dadurch gekennzeichnet, daß im Betriebszustand der Geschwindigkeitsbegrenzungsregelung bei Vollast (VL) das Steuerelement (11) geringfügig beabstandet zu dem volllastseitigen Anschlag (13a) des Freilaufelements (13) angeordnet ist.

11. Lastverstelleinrichtung nach Anspruch 10,dadurch gekennzeichnet, daß der zwischen den, die beiden Endpositionen des Stellgliedes (11) darstellenden Anschlägen (13a, 13b) des Freilaufelementes (13) gebildete Steuerbereich der Lastverstelleinrichtung in linearer Beziehung zueinanderstehende Sollwertvorgaben und degressive und/oder lineare So und/oder progressive Istwertvorgaben aufweist.

12. Lastverstelleinrichtung nach einem der Ansprüche 1 bis 11,dadurch gekennzeichnet, daß das Stellglied der Brennkraftmaschine als Drosselklappe (16) ausgebildet ist und der Mitnehmer (4), das Freilaufelement (13), die Koppelfeder (24), das Steuerelement (11), die Rückzugfeder (26) des Steuerelementes (11), das Sollwert- und Istwerterfassungselement (7, 12) und die Drosselklappe (16) eine Baueinheit bilden.

13. Lastverstelleinrichtung nach einem der Ansprüche 1 bis 12, dadurch gekennzeichnet, daß das Sollwerterfassungselement (7) als mit dem Mitnehmer (4) verbundener erster Schleifer (7) eines zwei Schleifer (7, 12) aufweisenden Vorgabe- und Rückmeldepotentiometers (8) ausgebildet ist, dessen Istwerterfassungselement (12) in Form des zweiten Schleifers (12) mit dem Steuerelement (11) gekoppelt ist, wobei der gegenseitige Abstand der Schleifer (7, 12) durch die elektronische Regeleinrichtung (22) überwacht wird.

14. Lastverstelleinrichtung nach einem der Ansprüche 1 bis 13, dadurch gekennzeichnet, daß am Fahrpedal (1) ein Pedalkontaktschalter (18) vorgesehen ist.

15. Lastverstelleinrichtung nach einem der Ansprüche 1 bis 14, dadurch gekennzeichnet, daß die elektronische Regeleinrichtung (22) in spannungsfreiem Zustand der Lastverstelleinrichtung ausgeschaltet ist.

16. Lastverstelleinrichtung nach einem der Ansprüche 1 bis 15, dadurch gekennzeichnet, daß der elektrische Stellantrieb (9) über eine Kupplung (10) mit dem Steuerelement (11) koppelbar ist.

17. Lastverstelleinrichtung nach Anspruch 16, dadurch gekennzeichnet, daß die Kupplung (10) im nicht angesteuerten Zustand des elektrischen Stellantriebes (9) geöffnet ist.

18. Lastverstelleinrichtung nach einem der Ansprüche 1 bis 17, dadurch gekennzeichnet, daß der elektrische Stellantrieb (9) in Abhängigkeit von einer oder mehreren zusätzlichen Regelgrößen ansteuerbar ist.

## Claims

1. Device for adjusting the power of an internal combustion engine, comprising
- a final controlling element (16),
- a control element (11) which acts on the final controlling element (16) and can be moved to and fro in the direction of final control between an idling position (LL) and a full-load position (VL), by a driving dog (4) coupled to an accelerator pedal (1) and pretensioned by means of a return spring (6) in the direction of idling of the final controlling element (16), and additionally by an electric final control drive (9),
- a nominal value measuring element (7) associated with the driving dog (4) and
- an actual value measuring element (12) associated with the control element (11),
- the electric final control drive (9) being adapted to be activated by an electronic controller (22) in dependence on the measured values,
characterised in that
a) the control element (11) is pretensioned by a return spring (26) in the direction of idling of the final controlling element (16) and
b) arranged on the driving dog (4) is a free wheel element (13) which
- incorporates an area in which the control element (11) engages with clearance,
- is mounted so as to be displaceable in the direction of final control and
- is pretensioned towards one arm (4a) of the driving dog (4) in the direction in which the final controlling element (16) opens, by means of a coupler spring (24) connected to the driving dog (4).

2. Load adjusting device according to claim 1, characterised in that the free wheel element is in the form of a free wheel bracket (13) and the control element (11) engages with clearance between the side pieces (13a, 13b) of the free wheel bracket (13).

3. Load adjusting device according to claim 1 or 2, characterised in that with the electric final control drive (9) inactive and with the driving dog (4) at the idle setting (LL) the control element (11) moves up against a limit stop (31) spring-loaded against the idle setting.

4. Load adjusting device according to any of claims 1 to 3, characterised in that between the driving dog (4) and the control element (11) is a distance monitoring device (15) which in the event of the driving dog (4) and control element (11) deviating from a preset distance from the controller (22) supplies a signal for use in a plausibility test, and in the absence of defined plausibility conditions the controller (22) uncouples or disconnects the electric final control drive (9) and the driving dog (4) and the control element (11) are then constrained mechanically in their movements.

5. Load adjusting device according to claim 4, characterised in that in the absence of a signal and in the absence of defined plausibility conditions the controller (22) uncouples or disconnects the electric final control drive (9).

6. Load adjusting device according to claim 4 or 5, characterised in that the distance monitoring device (15) is in the form of a safety contact circuit by means of which the position of the control element (11) in the free wheel element (13) can be checked for plausibility conditions in relation to the particular driving status of the vehicle powered by the internal combustion engine.

7. Load adjusting device according to claim 6, characterised in that the safety contact circuit (15) incorporates two safety contacts (39, 33; 40, 34, 35, 36), and with the electric final control drive (9) activated one of the safety contacts (39, 33) monitors the idling range of the internal combustion engine and the other safety contact (40, 34, 35, 36) monitors the partial load and full load range, and in the transition zone from idling operation to partial-load operation both safety contacts (39, 33; 40, 34, 35, 36) are activated.

8. Load adjusting device according to claim 7, characterised by the provision of a voltage supply circuit (32) for both the safety contacts (39, 33; 40, 34, 35, 36), as well as of a first voltage circuit running from one safety contact (39, 33) to the controller (22) and of a second voltage circuit running from the other safety contact (40, 34, 35, 36) to the controller (22), one contact (11a) being adapted to be connected to the voltage supply circuit (32) and on the one hand to the voltage circuit (33) extending over the idling range for one safety contact (39, 33), and on the other hand to the voltage circuit (36) extending over the partial/full load range for the other safety contact (40, 34, 35, 36).

9. Load adjusting device according to any of claims 1 to 8, characterised in that in the anti-slip control operating state the control element (11) moves the free wheel element (13) against the force of the coupler spring (24) in the direction of idling (LL).

10. Load adjusting device according to any of claims 1 to 8, characterised in that at full load (VL) in the speed restriction control operating state the control element (11) is disposed a small distance from the limit stop (13a) on the full-load side of the free wheel element (13).

11. Load adjusting device according to claim 10, characterised in that the control range of the load adjusting device formed between the limit stops (13a, 13b) representing the two extreme positions of the final control element (11) [sic] incorporates specified nominal values in a linear relationship to one another and degressive and/or linear and/or progressive specified actual values.

12. Load adjusting device according to any of claims 1 to 11, characterised in that the final controlling element of the internal combustion engine is in the form of a throttle valve (16) and the driving dog (4), the free wheel element (13), the coupler spring (24), the control element (11), the return spring (26) of the control element (11), the nominal value and actual value measuring element (7, 12) and the throttle valve (16) constitute a single module.

13. Load adjusting device according to any of claims 1 to 12, characterised in that the nominal value measuring element (7) is in the form of a first wiper (7), connected to the driving dog (4), of a specified-value and check-back potentiometer (8) incorporating two wipers (7, 12), the actual-value measuring element (12) of which potentiometer in the form of the second wiper (12) is coupled to the control element (11), the mutual distance of the wipers (7, 12) being monitored by the electronic controller (22).

14. Load adjusting device according to any of claims 1 to 13, characterised in that a touch-sensitive switch (18) is provided on the accelerator pedal (1).

15. Load adjusting device according to any of claims 1 to 14, characterised in that the electronic controller (22) is disconnected when the load adjusting device is in the off-circuit state.

16. Load adjusting device according to any of claims 1 to 15, characterised in that the electric final control drive (9) can be coupled to the control element (11) via a clutch (10).

17. Load adjusting device according to claim 16, characterised in that the clutch (10) is open when the electric final control drive (9) is in the non-activated state.

18. Load adjusting device according to any of claims 1 to 17, characterised in that the electric final control drive (9) can be triggered in dependence on one or more additional controlled variables.

## Revendications

1. Dispositif de réglage de la puissance d'un moteur à combustion interne comportant
- un organe de réglage (16)
- un élément de commande (11) agissant sur l'organe de réglage (16) et qui peut être déplacé dans un sens et dans l'autre grâce à un élément d'entraînement (4) couplé à une pédale (1) d'accélérateur et mis sous pré-tension mécanique, en direction de la marche en ralenti, de l'organe de réglage (16) au moyen d'un ressort de rappel (6) et qui, de plus, grâce à un dispositif électrique d'entraînement de réglage (9), peut être déplacé dans un sens et dans l'autre dans la direction de réglage entre une position de ralenti (LL) et une position de pleine charge (VL),
- un élément (7) de saisie de valeurs prescrites associé à l'élément d'entraînement (4), et
- un élément (12) de saisie de valeurs réelles associé à l'élément de commande (11)
le dispositif électrique d'entraînement de réglage (9) pouvant être commandé, en fonction des valeurs saisies, au moyen d'un dispositif (22) électronique de réglage, dispositif de réglage de puissance caractérisé en ce que :
a) l'élément (11) de commande est mis, au moyen du ressort de rappel (26), sous pré-tension mécanique dans la direction de ralenti de l'organe de réglage (16),
b) sur l'élément d'entraînement (4) est disposé un élément (13) de course libre qui
- présente une zone dans laquelle pénètre avec jeu l'élément de commande (11),
- est monté de façon à pouvoir être déplacé dans la direction de réglage, et
- qui, au moyen d'un ressort d'accouplement (24) relié à l'élément d'entraînement (4), est placé sous tension mécanique préalable dans la direction d'ouverture de l'organe de réglage (16) contre un bras (4a) de l'élément d'entraînement (4).

2. Dispositif de réglage de charge selon la revendication 1, caractérisé en ce que l'élément de course libre a une conformation de crochet (13) pour course libre et en ce que l'élément de commande (11) pénètre avec jeu entre les branches (13a, 13b) du crochet pour course libre (13).

3. Dispositif de réglage de charge selon la revendication 1 ou 2, caractérisé en ce que, dans le cas où le dispositif électrique d'entraînement de réglage (9) n'est pas activé, et où l'élément d'entraînement (4) se trouve en position de ralenti (LL), l'élément de commande (11) parvient à s'appuyer contre une butée (31) placée sous l'effet d'un ressort (agissant) dans la direction inverse de la direction de ralenti.

4. Dispositif de réglage de charge selon l'une des revendications 1 à 3, caractérisé en ce qu'entre l'élément d'entraînement (4) et l'élément de commande (11) on prévoit un dispositif (15) de surveillance de distance d'écart qui, au cas où la distance entre l'élément d'entraînement (4) et l'élément de commande (11) s'écarte de la valeur d'une distance fixée à l'avance, transmet un signal au dispositif de réglage (22) en vue d'une vérification de plausibilité, le dispositif de réglage (22), dans le cas où les conditions de plausibilité définies ne sont pas remplies, désaccouplant ou mettant hors circuit le dispositif électrique d'entraînement de réglage (a), et le guidage forcé de l'élément d'entraînement (4) et de l'élément de commande (11) étant réalisé obligatoirement de manière mécanique.

5. Dispositif de réglage de charge selon la revendication 4, caractérisé en ce qu'en cas d'absence de signal et d'absence des conditions de plausibilité définies, le dispositif (22) de réglage désaccouple ou met hors circuit le dispositif électrique d'entraînement de réglage (9).

6. Dispositif de réglage de charge selon la revendication 4 ou 5, caractérisé en ce que le dispositif (15) de surveillance de la distance d'écartement a une conformation de circuit d'un contact de sécurité au moyen duquel peut être vérifiée, sur la base des conditions de plausibilité, la position de l'élément de commande (11) dans l'élément (13) de course libre, par rapport à la situation instantanée de marche du véhicule entraîné par le moteur à combustion interne.

7. Dispositif de réglage de charge selon la revendication 6, caractérisé en ce que le circuit de contact de sécurité (15) présente deux contacts de sécurité (39, 33 ; 40, 34, 35, 36) et le dispositif électrique d'entraînement de réglage (9) étant activé, l'un des contacts de sécurité (39, 33) surveillant la zone de ralenti du moteur à combustion interne et l'autre contact de sécurité (40, 34, 35, 36) surveillant la zone de charge partielle et de pleine charge, les deux contacts de sécurité (39, 33 ; 40, 34, 35, 36) étant activés dans la zone de transition entre le fonctionnement au ralenti et le fonctionnement à charge partielle.

8. Dispositif de réglage de charge selon la revendication 7, caractérisé en ce que l'on prévoit un circuit ou une piste (22) d'alimentation en courant destinée aux deux contacts de sécurité (39, 33 ; 40, 34, 35, 36) ainsi qu'une première piste de courant allant de l'un des contacts de sécurité (39, 33) au dispositif de réglage (22) et une deuxième piste de courant allant de l'autre contact de sécurité (40, 34, 35, 36) au dispositif de réglage (22), un élément de contact (11a) pouvant être connecté avec la piste (32) d'alimentation en courant et avec, d'une part, la piste de courant (33) s'étendant sur la zone de ralenti, destinée à l'un des contacts de sécurité (39, 33) ainsi que d'autre part avec la piste de courant (36) s'étendant sur la zone de charge partielle et de pleine charge, destinée à l'autre contact de sécurité.

9. Dispositif de réglage de charge selon l'une des revendications 1 à 8, caractérisé en ce que le réglage anti-patinage étant en état de fonctionnement, l'élément (13) de course libre est déplacé par l'élément de commande (11), à l'encontre de la force du ressort d'accouplement (24), dans la direction du ralenti (LL).

10. Dispositif de réglage de charge selon l'une des revendications 1 à 8, caractérisé en ce que la régulation de limitation de vitesse étant en fonctionnement à pleine charge (VL), l'élément de commande (11) est disposé à une faible distance de la butée (13a), située du côté de la pleine charge, de l'élément (13) de course libre.

11. Dispositif de réglage de charge selon la revendication 10, caractérisé en ce que le domaine de commande du dispositif de réglage de charge formé entre les deux butées (13a, 13b) représentant les deux positions extrêmes de l'organe de réglage, présente des données de valeurs prescrites, en relation linéaire entre elles, et des données de valeurs réelles en relation dégressive et/ou linéaire et/ou progressive.

12. Dispositif de réglage de charge selon l'une des revendications 1 à 11, caractérisé en ce que l'organe de réglage du moteur à combustion interne a une conformation de papillon d'étranglement (16) et en ce que l'élément d'entraînement (4), l'élément (13) de course libre, le ressort d'accouplement (24), l'élément de commande (11), le ressort de rappel (26) de l'élément de commande (11), l'élément de saisie de valeurs prescrites et de valeurs réelles (7, 12) et le papillon d'étranglement (16) forment un sous-ensemble.

13. Dispositif de réglage de charge selon l'une des revendications 1 à 12, caractérisé en ce que l'élément (7) de saisie de valeurs prescrites est conformé en un premier curseur (7), relié à l'élément d'entraînement (4), d'un potentiomètre (8) travaillant sur données préalables et sur informations en retour et présentant deux curseurs (7, 12), dont l'élément de saisie des valeurs réelles se présentant sous la forme du deuxième curseur (12) est couplé à l'élément de commande (11), l'écart mutuel des curseurs (7, 12) étant surveillé par le dispositif de réglage électronique (22).

14. Dispositif de réglage de charge selon l'une des revendications 1 à 13, caractérisé en ce que l'on prévoit un interrupteur (18) à contact disposé sur la pédale (1) d'accélérateur.

15. Dispositif de réglage de charge selon l'une des revendications 1 à 14, caractérisé en ce que le dispositif électronique de réglage (22) est hors circuit lorsque le dispositif de réglage de charge n'est pas sous tension.

16. Dispositif de réglage de charge selon l'une des revendications 1 à 15, caractérisé en ce que le dispositif électrique de réglage (9) peut être accouplé, au moyen d'un accouplement (10), avec l'élément de commande (11).

17. Dispositif de réglage de charge selon la revendication 16, caractérisé en ce que l'accouplement (10) est ouvert lorsque le dispositif électrique d'entraînement de réglage (9) n'est pas à l'état activé.

18. Dispositif de réglage de charge selon l'une des revendications 1 à 17, caractérisé en ce que le dispositif électrique d'entraînement de réglage (9) peut être activé en fonction d'une ou de plusieurs grandeurs de réglage supplémentaires.
